# FASCICULE DE BREVET EUROPEEN

(11) **EP 3 264 512 B1**
(45) Date de publication et mention de la délivrance du brevet: **22.05.2019**
(21) Numéro de dépôt: 17179198.1
(22) Date de dépôt: 30.06.2017
(51) Int. Cl.: H01M 10/0525, H01M 10/0567, H01M 10/0569, H01M 4/505, H01M 4/525

(54) **CELLULES ÉLECTROCHIMIQUES DE BATTERIES AU LITHIUM SPÉCIFIQUES COMPRENANT DES ÉLECTROLYTES NON AQUEUX À BASE D'AU MOINS UN SOLVANT SULFONE ET/OU CARBONATE ET AU MOINS UN ADDITIF DE LA FAMILLE DES DIESTERS CYCLIQUES**
ELEKTROCHEMISCHE ZELLEN VON SPEZIFISCHEN LITHIUM-BATTERIEN, DIE NICHT-WÄSSRIGE ELEKTROLYTEN AUF DER BASIS VON MINDESTENS EINEM SULFON- UND/ODER CARBONAT-LÖSUNGSMITTEL UND MINDESTENS EINEM ZUSATZSTOFF AUS DER FAMILIE DER ZYKLISCHEN DIESTER ENTHÄLT
ELECTROCHEMICAL CELLS OF SPECIFIC LITHIUM BATTERIES INCLUDING NON-AQUEOUS ELECTROLYTES BASED ON AT LEAST ONE SULPHONATE AND/OR CARBONATE SOLVENT AND AT LEAST ONE ADDITIVE OF THE CYCLIC DIESTER FAMILY

(30) Priorité: 01.07.2016 FR 1656313
(43) Date de publication de la demande: 03.01.2018
(73) Titulaire: Commissariat à l'énergie atomique et aux énergies alternatives, 75015 Paris (FR)
(72) Inventeur: LE DIGABEL, Matthieu, 37260 MONTS (FR); PENOT, Nelly, 37260 MONTS (FR); BILLER, Agnès, 37550 SAINT AVERTIN (FR)
(74) Mandataire: Brevalex

(56) Documents cités:
- WO-A1-2008/023951
- WO-A1-2015/118264
- WO-A1-2015/160773
- US-A1- 2007 015 048
- US-A1- 2014 134 461
- US-A1- 2015 295 277

## Description

### DOMAINE TECHNIQUE

La présente invention a trait à des cellules électrochimiques de batteries au lithium spécifiques comprenant des électrolytes non aqueux à base d'un solvant sulfone et d'un solvant carbonate spécifiques et au moins un additif de la famille des diesters cycliques, ces batteries étant plus spécifiquement des batteries lithium-ion.

Les batteries au lithium sont particulièrement intéressantes pour les domaines où l'autonomie est un critère primordial, tels que cela est le cas des domaines de l'informatique, de la vidéo, de la téléphonie mobile, des transports tels que les véhicules électriques, les véhicules hybrides, ou encore des domaines médicaux, spatiaux, de la microélectronique.

D'un point de vue fonctionnel, les batteries au lithium du type lithium-ion reposent sur le principe de l'intercalation-désintercalation du lithium au sein des matériaux constitutifs des électrodes des cellules électrochimiques de la batterie.

Plus précisément, la réaction à l'origine de la production de courant (c'est-à-dire lorsque la batterie est en mode de décharge) met en jeu le transfert, par l'intermédiaire d'un électrolyte conducteur d'ions lithium, de cations lithium provenant d'une électrode négative qui viennent s'intercaler dans le réseau accepteur de l'électrode positive, tandis que des électrons issus de la réaction à l'électrode négative vont alimenter le circuit extérieur, auquel sont reliées les électrode positive et négative.

La capacité de stockage des batteries lithium-ion est actuellement limitée par la nature des électrodes positives utilisées, dont le potentiel est généralement compris entre 3,4 et 4 V *vs* Li⁺/Li. Les électrodes positives actuelles comprennent, généralement, comme matériaux actifs, des matériaux lamellaires tels que LiCoO₂, LiNiO₂ ou des composés à structure spinelle, tels que LiMn₂O₄ ou des dérivés. Les électrodes négatives comprennent, le plus souvent, comme matériau actif, du carbone (graphite ou des dérivés) ou un matériau oxydé à structure spinelle type Li₄Ti₅O₁₂. De nombreux travaux ont été réalisés ces dernières années dans l'objectif de développer de nouvelles électrodes positives avec un potentiel de 5 V, afin d'améliorer la capacité des batteries, et notamment avec des oxydes à structure spinelle de type LiNi Mn_{1,5}O₄ et LiNi_{0,4}Mn_{1,6}O₄.

Comme mentionné ci-dessus, les électrolytes non-aqueux assurent au sein des batteries Li-ion le transfert des ions lithium entre les électrodes positives et négatives. Les électrolytes actuels sont généralement à base d'un sel de lithium, tel que LiPF₆ (hexafluorophosphate de lithium) dissous dans un mélange de solvants organiques à base d'alkylcarbonates cycliques et linéaires.

Ces électrolytes conventionnels présentent des conductivités élevées (par exemple, supérieure à 6 ms/cm à 20°C) et de bonnes performances électrochimiques dans une fenêtre de potentiels s'échelonnant de 0 à 4,2 V (exprimé par rapport à Li⁺/Li). Au-delà de 4,2 V, comme explicité dans J. Electrochem Soc., 138, (1991) 2864, ces solutions électrolytiques se dégradent par oxydation, ce qui entraîne une génération de gaz et une détérioration des performances de la batterie se traduisant par une autodécharge partielle ou totale et une diminution de la durée de vie.

Aussi, des recherches ont porté sur la conception de nouveaux électrolytes, dans lesquels un additif a été introduit pour générer ou favoriser l'apparition d'une couche de protection à la surface des électrodes.

L'apport d'additifs tels que l'anhydride succinique (Journal of Power Sources, 236 (2013) 39), le lithium *bis*(oxalato)borate (LiBOB) (J.Electrochem.Soc. 160, (2013) A2005), le lithium difluoro(oxalato)borate (LiDFOB) (J.Electroanalytical Chemistry, 745, 2015, 8), le 1,3-propane sultone (Electrochem. Commun., 9, 2007, 801), le thiophène (J.Solid. State Electrochem, 19 (2015), 1123), pour ne citer qu'eux, a été démontré dans des dispositifs dotés d'une électrode à haute tension. Une cellule électrochimique de batterie au lithium est décrite dans le document WO2008/023951.

Au vu de ce qui existe, les auteurs de la présente invention se sont fixé de mettre au point de nouvelles cellules électrochimiques spécifiques permettant de délivrer une tension importante (d'au moins 4 V) fonctionnant avec des électrolytes spécifiques, qui présentent des performances recherchées dans le domaine des batteries encore améliorées, à savoir, une faible perte de capacité, une faible autodécharge et une faible irréversibilité.

### EXPOSÉ DE L'INVENTION

Les auteurs de la présente invention ont découvert qu'en ajoutant un additif spécifique à un électrolyte comprenant au un solvant de la famille des sulfones et un solvant de la famille des carbonates spécifiques dans un contexte donné d'électrodes, il est possible de répondre aux besoins exprimés ci-dessus.

Ainsi, l'invention a trait à une cellule électrochimique de batterie au lithium comprenant :
- une électrode positive comprenant, comme matériau actif, un oxyde lithié de formule suivante :

   LiNi₁₋ₓMn₁₊ₓO₄

   dans laquelle 0<x<1 ;
- une électrode négative comprenant, comme matériau actif, un matériau carboné ; et
- un électrolyte disposé entre ladite électrode positive et ladite électrode négative comprenant :
   *un mélange d'un solvant sulfone de formule (II) suivante :

      R⁵-SO₂-R⁶ (II)

      dans laquelle R⁵ et R⁶ représentent, indépendamment l'un de l'autre, un groupe alkyle, linéaire ou ramifié, comprenant de 1 à 7 atomes de carbone et comprenant éventuellement un ou plusieurs atomes d'halogène (par exemple, du fluor), un groupe aryle comprenant éventuellement un ou plusieurs atomes d'halogène (par exemple, du fluor) ;
      et d'un solvant carbonate de formule (VII) suivante :

      R¹³-O-CO-O-R¹⁴ (VII)

      dans laquelle R¹³ et R¹⁴ représentent, indépendamment, l'un de l'autre, un groupe alkyle, par exemple, linéaire, comportant, par exemple, de 1 à 7 atomes de carbone ;
   *au moins un additif répondant à la formule (I) suivante : 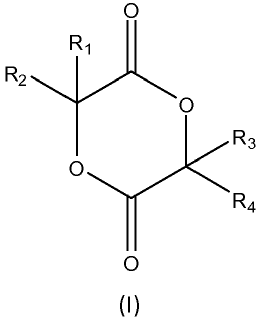 dans laquelle les R₁ à R₄ représentent, indépendamment l'un de l'autre, un atome d'hydrogène, un groupe alkyle comprenant de 1 à 5 atomes de carbone, dont un ou plusieurs atomes d'hydrogène peuvent être substitués par un atome d'halogène (par exemple, du fluor) ;
   *au moins un sel de lithium.

Avant d'entrer plus en détail dans la description de l'invention, nous précisons les définitions suivantes.

Par électrode positive, on entend, classiquement, dans ce qui précède et ce qui suit, l'électrode qui fait office de cathode, quand la batterie débite du courant (c'est-à-dire lorsqu'elle est en processus de décharge) et qui fait office d'anode, lorsque la batterie est en processus de charge.

Par électrode négative, on entend, classiquement, dans ce qui précède et ce qui suit, l'électrode qui fait office d'anode, quand la batterie débite du courant (c'est-à-dire lorsqu'il est en processus de décharge) et qui fait office de cathode, lorsque la batterie est en processus de charge.

Par matériau actif, on entend, classiquement, dans ce qui précède et ce qui suit, le matériau qui est directement impliqué dans les réactions d'insertion et de désinsertion du lithium.

Avec un telle association entre les ingrédients de l'électrolyte susmentionné avec des batteries fonctionnant avec lesdits matériaux actifs, qui permettent de délivrer une tension d'au moins 4 V, les auteurs de la présente invention ont pu mettre en évidence une amélioration significative des performances de ces batteries notamment en termes de perte de capacité, d'autodécharge (ce phénomène étant significativement réduit avec les électrolytes de l'invention) et d'irréversibilité, par rapport à des électrolytes comprenant les mêmes ingrédients sans la présence dudit additif.

Qui plus est, les électrolytes compris dans les batteries de l'invention présentent une stabilité vis-à-vis des phénomènes d'oxydation, notamment lorsqu'ils sont soumis à des potentiels supérieurs à 5 V exprimés par rapport au couple Li⁺/Li.

Comme mentionné ci-dessus, l'électrolyte comprend un mélange d'un solvant sulfone de formule (II) telle que définie ci-dessus et d'un solvant carbonate de formule (VII) telle que définie ci-dessus.

Par exemple, R⁵ et R⁶ peuvent représenter, indépendamment l'un de l'autre, un groupe méthyle (-CH₃), un groupe éthyle (-CH₂-CH₃), un groupe n-propyle (-CH₂-CH₂-CH₃), un groupe n-butyle (-CH₂-CH₂-CH₂-CH₃), un groupe n-pentyle (-CH₂-CH₂-CH₂-CH₂-CH₃), un groupe n-hexyle (-CH₂-CH₂-CH₂-CH₂-CH₂-CH₃), un groupe n-heptyle (-CH₂-CH₂-CH₂-CH₂-CH₂-CH₂-CH₃), un groupe *iso*-propyle (-CH(CH₃)₂), un groupe *iso*-butyle (-CH₂CH(CH₃)₂).

Des solvants sulfones linéaires spécifiques peuvent être l'éthylméthylsulfone (connue sous l'abréviation EMS), la di(*n*-butyl)sulfone, la méthylisopropylsulfone, l'éthylisopropylsulfone, la diéthylsulfone, la di-n-propylsulfone, la diméthylsulfone, la 2-fluorophénylméthylsulfone.

Avantageusement, un solvant sulfone linéaire particulièrement approprié est l'éthylméthylsulfone (pouvant être dénommée par l'abréviation EMS).

Comme solvants carbonates linéaires spécifiques, on peut citer le carbonate de diméthyle (connu sous l'abréviation DMC), le carbonate de diéthyle (connu sous l'abréviation DEC), l'éthylméthylcarbonate (connu sous l'abréviation EMC) ou les mélanges de ceux-ci.

Encore plus spécifiquement, l'électrolyte peut comprendre, comme solvant(s) :
- un mélange d'éthylméthylsulfone et de carbonate de diméthyle (par exemple, dans des proportions respectives 1 :1).

Le ou les solvants sulfones susmentionnés peuvent être compris dans l'électrolyte à hauteur de 10 à 90% en masse par rapport à la masse totale du mélange de solvants.

L'électrolyte peut comprendre, en outre, un ou plusieurs cosolvants, qui ne sont pas des solvants tels que ceux définis ci-dessus.

En particulier, le ou les cosolvants peuvent être des solvants esters répondant à la formule (IX) suivante : 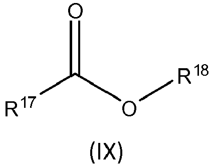 dans laquelle R¹⁷ et R¹⁸ représentent, indépendamment l'un de l'autre, un groupe alkyle, linéaire ou ramifié, comprenant de 1 à 7 atomes de carbone, un ou plusieurs des atomes d'hydrogène dudit groupe alkyle pouvant être substitué(s) par un atome d'halogène, tel qu'un atome de fluor.

A titre d'exemples, il peut s'agir de l'acétate d'éthyle (connu sous l'abréviation EA), le propionate de méthyle (connu sous l'abréviation Mpr), le méthylacétate de triméthyle (connu sous l'abréviation MTMA), l'éthylfluoroacétate (connu sous l'abréviation EFA).

Lorsqu'il(s) est (sont) présent(s), le ou les cosolvants sont, avantageusement, présents à hauteur de 10% à 90% en masse par rapport à la masse totale du ou des solvants susmentionnés.

Comme mentionné ci-dessus, l'électrolyte comporte, comme élément essentiel, un additif qui est un composé diester cyclique de formule (I) suivante : 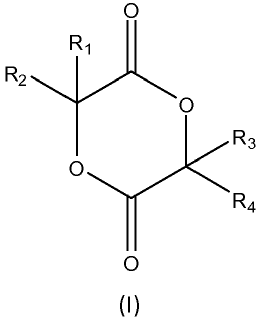 dans laquelle les R₁ à R₄ représentent, indépendamment l'un de l'autre, un atome d'hydrogène, un groupe alkyle comprenant de 1 à 5 atomes de carbone, dont un ou plusieurs atomes d'hydrogène peuvent être substitués par un atome d'halogène (par exemple, du fluor), étant entendu que cette formule couvre l'ensemble des isomères existant pour ce composé de formule (I).

A titre d'exemple, il peut s'agir d'un composé, dans lequel R¹ à R⁴ correspondent à un atome d'hydrogène, un tel composé correspondant au glycolide de formule (X) suivante :

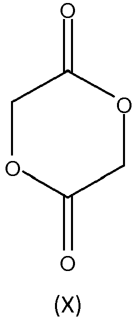

A titre d'exemple, il peut s'agir d'un composé, dans lequel au moins deux des groupes R¹ à R⁴ correspondent à un groupe alkyle, par exemple, un groupe méthyle, un exemple spécifique de composé répondant à cette définition étant le lactide répondant à la formule (XI) suivante :

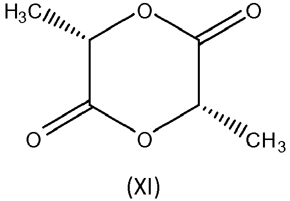

Cet additif peut être présent dans l'électrolyte selon un teneur inférieure à 10% en masse par rapport à la masse totale de l'électrolyte, par exemple, une teneur allant de 0,1% à 10% en masse par rapport à la masse totale de l'électrolyte et, de préférence, de 0,5% à 5% en masse par rapport à la masse totale de l'électrolyte.

Le sel de lithium quant à lui peut être de l'hexafluorophosphate de lithium (LiPF₆), du perchlorate de lithium (LiClO₄), du tétrafluoroborate de lithium (LiBF₄), de l'hexafluoroarsénate de lithium (LiAsF₆), du trifluorométhylsulfonate de lithium, du *bis*(oxalato)borate de lithium (connu sous l'abréviation LiBOB), du *bis*(trifluorométhylsulfonyl)imidure de lithium (connu sous l'abréviation LiTFSI, du *bis*(fluorosulfonyl)imidure de lithium (connu sous l'abréviation LiFSI), un perfluoroalkylphosphate de lithium, tel que celui de formule LiP(CₙF₂ₙ₊₁)F₆₋ₓ où 0≤n≤10 et 0≤x≤6, du *bis*(perfluoroéthylsulfonyl)imidure de lithium (connu sous l'abréviation LiBETI),un perfluoroalkylfluoroborate de lithium, tel que celui de formule LiB(CₙF₂ₙ₊₁)F₄₋ₓ où 0≤n≤10 et 0≤x≤4, le *bis*(trifluorométhanesulfonyl)imidure de lithium (connu sous l'abréviation LiLm), le (difluorooxalato)borate de lithium (LiBF₂C₂O₄) ou le *bis*(pentafluoroéthylsulfonyl)imidure de lithium. Le sel de lithium peut être utilisé seul ou en mélange.

Le sel de lithium peut être présent à une concentration de 0,1 mol/L à 2 mol/L.

De préférence, le sel de lithium est LiPF₆, par exemple, à une concentration de 1 mol/L.

Des électrolytes spécifiques conformes à l'invention peuvent être ÷
- un électrolyte comprenant un mélange EMS-DMC (par exemple, en proportion massique 1:1), du glycolide (1% massique par rapport à la masse totale de l'électrolyte) et du LiPF₆ 1M.

Comme mentionné ci-dessus, l'électrode positive comprend, comme matériau d'insertion du lithium ou matériau actif, un oxyde lithié comprenant du manganèse de formule suivante :

LiNi₁₋ₓMn₁₊ₓO₄

dans laquelle 0<x<1.

Ces matériaux font partie de la catégorie générale des matériaux à insertion de lithium, dont la tension de décharge est supérieure à 4,5V exprimée par rapport au couple Li⁺/Li et plus spécifiquement, des matériaux du type matériau lithié à structure spinelle, ces matériaux étant connus sous l'appellation de « spinelle 5V ».

Des oxydes lithiés spécifiques répondant à cette définition sont ceux de formules LiNi_{0,4}Mn_{1,6}O₄ ou LiNi_{0,5}Mn_{1,5}O₄.

Plus spécifiquement, les oxydes de formule LiNi_{0,4}Mn_{1,6}O₄ ou LiNi_{0,5}Mn_{1,5}O₄ présentent la particularité de présenter un potentiel principal d'insertion/désinsertion du lithium de l'ordre de 4,7 V (ce potentiel étant exprimé par rapport au couple de référence Li+/Li).

Outre la présence d'un matériau à insertion de lithium, l'électrode positive peut comprendre :
- au moins un matériau conducteur électronique ;
- au moins un liant pour assurer la cohésion entre ledit matériau à insertion de lithium et ledit matériau conducteur électronique ; et
- éventuellement, des fibres conductrices électroniques.

Le matériau conducteur électronique peut être, de préférence, un matériau carboné, à savoir un matériau comprenant du carbone à l'état élémentaire.

On peut citer comme matériau carboné, du noir de carbone.

Le liant peut être, de préférence, un liant polymérique, Parmi les liants polymériques susceptibles d'être utilisés, on peut citer :
*les (co)polymères fluorés éventuellement conducteurs de protons, tels que les polymères fluorés, tels qu'un polytétrafluoroéthylène (connu sous l'abréviation PTFE), un polyfluorure de vinylidène (connu sous l'abréviation PVDF) ;
*les polymères élastomères, tels qu'un copolymère styrène-butadiène (connu sous l'abréviation SBR);
*les polymères de la famille des celluloses, tels qu'une carboxyméthylcellulose (connue sous l'abréviation CMC) ; ou
*les mélanges de ceux-ci.

Les fibres conductrices électroniques, lorsqu'elles sont présentes, peuvent participer, en outre, à la bonne tenue mécanique de l'électrode positive et sont choisies, à cet effet, de sorte à présenter un module d'Young très important. Des fibres adaptées à cette spécificité peuvent être des fibres de carbone, telles que des fibres de carbone du type Tenax® ou VGCF-H®. Les fibres de carbone Tenax® contribuent à améliorer les propriétés mécaniques et présentent une bonne conductivité électrique. Les fibres de carbone VGCF-H® sont des fibres synthétisées par vapeur et contribuent à améliorer les propriétés thermiques et électriques, la dispersion et l'homogénéité.

L'électrode négative comprend, comme matériau actif, un matériau carboné, tel qu'avantageusement du graphite.

Outre la présence d'un matériau actif, l'électrode négative peut comprendre :
- au moins un matériau conducteur électronique ;
- au moins un liant pour assurer la cohésion entre ledit matériau à insertion de lithium et ledit matériau conducteur électronique ; et
- éventuellement, des fibres conductrices électroniques.

Le matériau conducteur électronique, le liant et les éventuelles fibres conductrices électroniques peuvent être de même nature que ceux explicités plus haut pour l'électrode positive.

Que ce soit pour l'électrode positive ou l'électrode négative, elles peuvent être associées à un collecteur de courant, qui peut se présenter sous forme d'une feuille métallique. Il peut s'agir notamment d'un collecteur de courant en aluminium ou en cuivre.

Au sein des cellules conformes à l'invention, l'électrolyte de l'invention peut être amené, dans les cellules électrochimiques des batteries au lithium, telles que les batteries lithium-ion, à imprégner un séparateur, lequel est disposé entre l'électrode positive et l'électrode négative de la cellule électrochimique.

Ce séparateur peut être en un matériau poreux, tel qu'un matériau en fibre de verre, un matériau polymérique, tel que du polypropylène, du polyéthylène, de la cellulose, apte à accueillir dans sa porosité l'électrolyte liquide. Plus spécifiquement, il peut s'agir d'une membrane de type Celgard 2400®.

Les cellules électrochimiques entrent dans la constitution de batteries au lithium.

Aussi, l'invention a trait également à une batterie au lithium comprenant au moins une cellule électrochimique telle que définie ci-dessus.

Ces batteries peuvent adopter une structure de pile-bouton.

L'invention va maintenant être décrite à la lumière des exemples donnés ci-dessous donnés à titre illustratif et non limitatif.

### BREVE DESCRIPTION DES FIGURES

La figure unique est une représentation, en vue éclatée, d'une batterie conforme à l'invention.

### EXPOSÉ DÉTAILLÉ DE MODES DE RÉALISATION PARTICULIERS

Dans un premier temps, il est procédé à la préparation de différents électrolytes (Exemple 1).

Dans un deuxième temps, il est procédé à la préparation de batteries au lithium comprenant lesdits électrolytes préparés à l'exemple 1 (Exemple 2).

### EXEMPLE 1

Cet exemple illustre la préparation de différents électrolytes (un électrolyte conforme à l'invention et cinq électrolytes non conformes à l'invention).

### Exemple 1.1-Préparation d'un électrolyte EC/DMC 1M LiPF₆ (Electrolyte de référence 1)

Cet électrolyte non conforme à l'invention est préparé en boîte à gants, par dissolution de LiPF₆ 1M (d'origine Fluorochem) dans une base solvant constituée de 50% de sa masse de EC (d'origine Merck) et de 50% de sa masse en DMC (d'origine Merck).

### Exemple 1.2-Préparation d'un électrolyte EC/DMC 1M LiPF₆ - 0,5% en masse de glycolide

Pour préparer cet électrolyte non conforme à l'invention, il est ajouté, à l'électrolyte de l'exemple 1.1, du glycolide d'origine Sigma Aldrich comme additif (0,5% massique/masse totale de l'électrolyte).

### Exemple 1.3-Préparation d'un électrolyte EC/DMC 1M LiPF₆ - 1% en masse de glycolide

Pour préparer cet électrolyte non conforme à l'invention, il est ajouté, à l'électrolyte de l'exemple 1.1, du glycolide d'origine Sigma Aldrich comme additif (1% massique/ masse totale de l'électrolyte).

### Exemple 1.4-Préparation d'un électrolyte EC/DMC 1M LiPF₆ - 2% massique de glycolide

Pour préparer cet électrolyte non conforme à l'invention, il est ajouté, à l'électrolyte de l'exemple 1.1, du glycolide d'origine Sigma Aldrich comme additif (2% massique/ masse totale de l'électrolyte).

### Exemple 1.5-Préparation d'un électrolyte EMS/DMC 1M LiPF₆ (Electrolyte de référence 2)

Cet électrolyte non conforme à l'invention est préparé en boîte à gants, par dissolution de LiPF₆ 1M (d'origine Fluorochem) dans une base solvant constituée de 50% de sa masse de EMS (d'origine TCI Europe) et de 50% de sa masse en DMC (d'origine Merck).

### Exemple 1.6-Préparation d'un électrolyte EMS/DMC 1M LiPF₆ - 1% massique de glycolide

Pour préparer cet électrolyte conforme à l'invention, il est ajouté, à l'électrolyte de l'exemple 1.5, du glycolide d'origine Sigma Aldrich comme additif (1% massique/masse totale de l'électrolyte).

### Exemple 2-Préparation de batteries au lithium

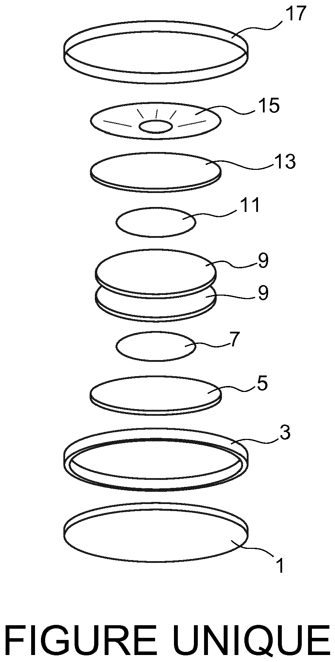

Cet exemple illustre la préparation de batteries au lithium du type pile bouton 2032 avec les électrolytes préparés à l'exemple 1 ci-dessus, chacune de ces batteries comprenant, comme illustré sur la vue éclatée de la figure 1 jointe en annexe, les éléments suivants :
- une électrode positive 7 de diamètre 16 mm et d'une capacité de 1,17 mAh/cm², constituée d'une feuille d'aluminium dont la face supérieure est recouverte d'un mélange composé de 90% massique de matériau actif LiNi_{0,4}Mn_{1,6}O₄, 5% massique de carbone de type super P et de 5% massique de liant PVDF ;
- une électrode négative 11 de diamètre 16 mm et d'une capacité de 1,4 mAh/cm², constituée d'une feuille de cuivre, dont la face en contact avec le séparateur (face inférieure) est recouverte d'un matériau actif constitué de 96% massique de graphite, 1% massique de liant CMC, 2% massique de liant SBR et 1% massique de noir de carbone type Super P ;
- entre ladite électrode positive et ladite électrode négative, deux séparateurs 9 imbibés d'électrolyte (respectivement, un séparateur Celgard 2400 et un séparateur Viledon de diamètres 16,5 mm) ;
- du côté de l'électrode positive, respectivement, une cale 5, un joint d'étanchéité 3 et un couvercle inférieur 1 ; et
- du côté de l'électrode négative, respectivement, une cale 13, un ressort 15 et un couvercle supérieur 17.

La préparation des batteries consiste en la mise en oeuvre des opérations suivantes.

L'assemblage est réalisé en boîte à gants sous argon par superposition successive d'un couvercle inférieur doté d'un joint d'étanchéité, d'une cale inox, d'un disque d'électrode positive (matériau actif au-dessus), de deux disques de séparateur imbibés de l'électrolyte à évaluer (volume introduit de 150 µL), d'un disque d'électrode négative (matériau actif en-dessous), d'une cale inox, d'un ressort et d'un couvercle supérieur.

L'ensemble est ensuite serti par pressage en boîte à gants.

### Exemple 3-Détermination des performances des batteries préparées à l'exemple 2

Dans cet exemple, les batteries préparées conformément à l'exemple 2 sont soumises à des tests de sorte à déterminer la perte en capacité, l'autodécharge et l'irréversibilité de ces batteries.

### Exemple 3.1-Protocole expérimental

Les batteries préparées à l'exemple 2 subissent une séquence de cyclage à 45°C selon un régime C établi sur la base de la capacité de l'électrode positive. La séquence se déroule de la façon suivante :
*2 pré-cycles à un régime de charge de C/5 et décharge de D/5, chaque cycle comprenant successivement une charge jusqu'à 4,8 V, un maintien à 4,8 V pendant 10 minutes puis une décharge jusqu'à 3,5 V ;
*50 cycles à un régime de charge de 1C et décharge de D, chaque cycle comprenant successivement une charge jusqu'à 4,8 V, un maintien à 4,8 V pendant 10 minutes puis une décharge jusqu'à 3,5 V ;
*un cycle à un régime de charge de C/5 et décharge de D/5, comprenant successivement une charge jusqu'à 4,8 V, un maintien à 4,8 V pendant 10 minutes puis une période de suivi en abandon (communément appelé OCV) pendant 72 heures puis une décharge jusqu'à 3,5 V ; et
*un cycle à un régime de charge de C/5 et décharge de D/5, comprenant successivement une charge jusqu'à 4,8 V, un maintien à 4,8 V pendant 10 minutes, puis une décharge jusqu'à 3,5 V.

### Exemple 3.2-Détermination de la perte de capacité

A l'issue de la séquence, la perte de capacité est déterminée comme étant la perte de capacité entre la première décharge (après les 2 cycles de formation) et la 50^{ème} décharge en régime C.

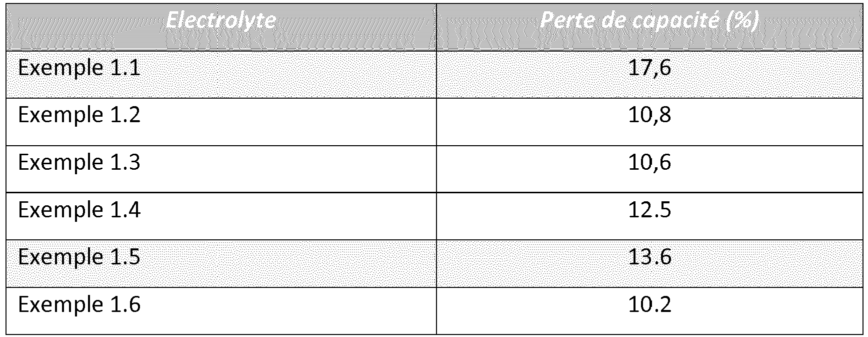

### Exemple 3.3-Détermination de l'autodécharge :

L'autodécharge est déterminée par le pourcentage de capacité perdue entre le début et la fin de la période de 72 h d'OCV.

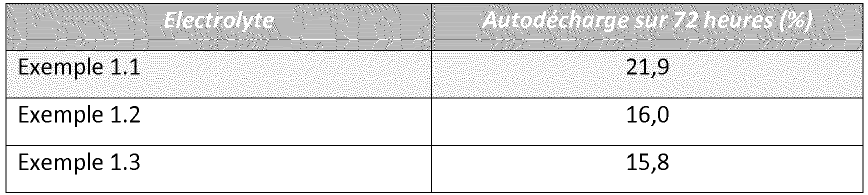

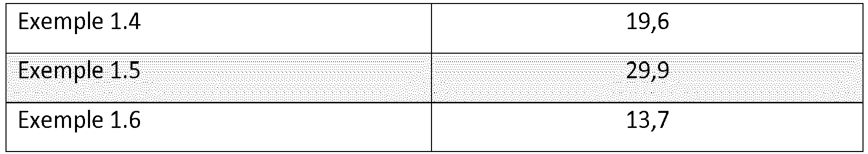

Ces résultats montrent l'efficacité des batteries de l'invention sur les propriétés d'autodécharge, et notamment avec des électrolytes à base de sulfones.

### Exemple 3.4-Détermination de l'irréversibilité

L'irréversibilité est déterminée par le pourcentage de capacité perdue entre les deux dernières charges à régime C/5 (avant et après l'autodécharge).

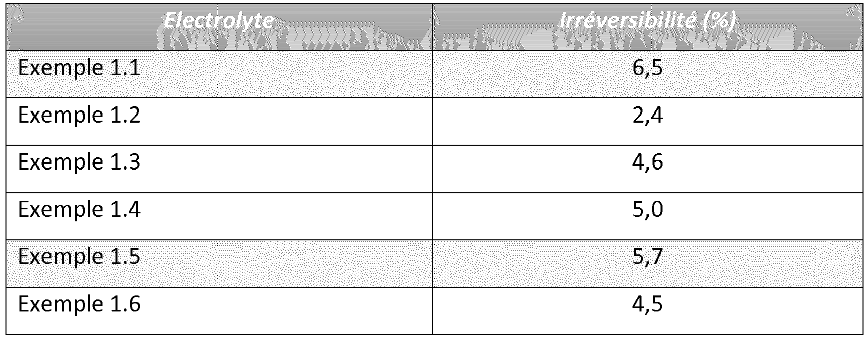

## Revendications

1. Cellule électrochimique de batterie au lithium comprenant :
- une électrode positive comprenant, comme matériau actif, un oxyde lithié de formule suivante :
LiNi₁₋ₓMn₁₊ₓO₄
dans laquelle 0<x<1 ;
- une électrode négative comprenant, comme matériau actif, un matériau carboné ; et
- un électrolyte disposé entre ladite électrode positive et ladite électrode négative comprenant :
*comme solvants, un mélange d'un solvant sulfone de formule (II) suivante :
R⁵-SO₂-R⁶ (II)
dans laquelle R⁵ et R⁶ représentent, indépendamment l'un de l'autre, un groupe alkyle, linéaire ou ramifié, comprenant de 1 à 7 atomes de carbone et comprenant éventuellement un ou plusieurs atomes d'halogène, un groupe aryle comprenant éventuellement un ou plusieurs atomes d'halogène ;
et d'un solvant carbonate de formule (VII) suivante :
R¹³-O-CO-O-R¹⁴ (VII)
dans laquelle R¹³ et R¹⁴ représentent, indépendamment, l'un de l'autre, un groupe alkyle ;
*au moins un additif répondant à la formule (I) suivante : 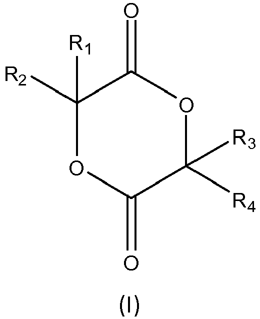 dans laquelle les R₁ à R₄ représentent, indépendamment l'un de l'autre, un atome d'hydrogène, un groupe alkyle comprenant de 1 à 5 atomes de carbone, dont un ou plusieurs atomes d'hydrogène peuvent être substitués par un atome d'halogène ;
*au moins un sel de lithium.

2. Cellule selon la revendication 1, dans laquelle le solvant sulfone est l'éthyméthylsulfone.

3. Cellule selon la revendication 1 ou 2, dans laquelle le solvant carbonate est le carbonate de diméthyle, le carbonate de diéthyle, l'éthylméthylcarbonate ou les mélanges de ceux-ci.

4. Cellule selon l'une quelconque des revendications précédentes, dans laquelle l'électrolyte comprend, comme solvants, un mélange d'éthylméthylsulfone et de carbonate de diméthyle (par exemple, dans des proportions respectives 1 :1).

5. Cellule selon l'une quelconque des revendications précédentes, dans laquelle, pour l'additif, R¹ à R⁴ correspondent à un atome d'hydrogène, un tel composé correspondant au glycolide de formule (X) suivante :

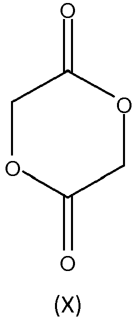

6. Cellule selon l'une quelconque des revendications 1 à 4, dans laquelle, pour l'additif, au moins deux des groupes R¹ à R⁴ correspondent à un groupe alkyle.

7. Cellule selon l'une quelconque des revendications 1 à 4 et 6, dans laquelle l'additif répond à la formule (XI) suivante :

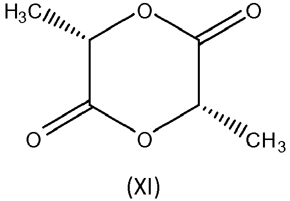

8. Cellule selon l'une quelconque des revendications précédentes, dans laquelle le sel de lithium est de l'hexafluorophosphate de lithium (LiPF₆), du perchlorate de lithium (LiClO₄), du tétrafluoroborate de lithium (LiBF₄), de l'hexafluoroarsénate de lithium (LiAsF₆), du trifluorométhylsulfonate de lithium, du *bis*(oxalato)borate de lithium, du *bis*(trifluorométhylsulfonyl)imidure de lithium, du *bis*(fluorosulfonyl)imidure de lithium, un perfluoroalkylphosphate de lithium, tel que celui de formule LiP(CₙF₂ₙ₊₁)F₆₋ₓ où 0≤n≤10 et 0≤x≤6, du *bis*(perfluoroéthylsulfonyl)imidure de lithium, un perfluoroalkylfluoroborate de lithium, tel que celui de formule LiB(CₙF₂ₙ₊₁)F₄₋ₓ où 0≤n≤10 et 0≤x≤4, le *bis*(trifluorométhanesulfonyl)imidure de lithium, le (difluorooxalato)borate de lithium (LiBF₂C₂O₄) ou le *bis*(pentafluoroéthylsulfonyl)imidure de lithium.

9. Cellule selon l'une quelconque des revendications précédentes, dans laquelle le sel de lithium est LiPF₆.

10. Cellule selon l'une quelconque des revendications précédentes, dans laquelle l'électrolyte est un électrolyte comprenant un mélange EMS-DMC (par exemple, en proportion massique 1 :1), du glycolide (1% massique par rapport à la masse totale de l'électrolyte) et du LiPF₆ 1M.

11. Cellule selon l'une quelconque des revendications précédentes, dans laquelle le matériau actif de l'électrode positive est l'oxyde de formule LiNi_{0,4}Mn_{1,6}O₄.

12. Cellule selon l'une quelconque des revendications précédentes, dans laquelle le matériau actif de l'électrode négative est du graphite.

13. Batterie au lithium comprenant au moins une cellule électrochimique telle que définie selon l'une quelconque des revendications 1 à 12.

## Patentansprüche

1. Elektrochemische Lithiumbatteriezelle, umfassend:
- eine positive Elektrode, die als aktives Material ein Lithiumoxid der folgenden Formel umfasst:
LiNi₁₋ₓMn₁₋ₓO₄,
in der 0 < x <1;
- eine negative Elektrode, die als aktives Material ein kohlenstoffhaltiges Material
umfasst; und
- einen zwischen der positiven Elektrode und der negativen Elektrode angeordneten Elektrolyten, umfassend:
* als Lösungsmittel ein Gemisch eines Sulfon-Lösungsmittels der folgenden Formel (II):
R⁵-SO₂-R⁶ (II)
in der R⁵ und R⁶ unabhängig voneinander eine lineare oder verzweigte Alkylgruppe, umfassend von 1 bis 7 Kohlenstoffatome und gegebenenfalls umfassend eine oder mehrere Halogenatome, eine Arylgruppe gegebenenfalls umfassend ein oder mehrere Halogenatome, darstellen;
und ein Carbonatlösungsmittel der folgenden Formel (VII):
R¹³-O-CO-O-R¹⁴ (VII)
in der R¹³ und R¹⁴ unabhängig voneinander eine Alkylgruppe darstellen;
* mindestens ein Additiv entsprechend der folgenden Formel (I): 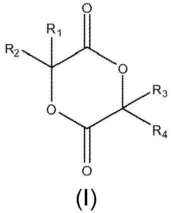 in der die R¹ bis R⁴ unabhängig voneinander ein Wasserstoffatom, eine Alkylgruppe umfassend von 1 bis 5 Kohlenstoffatome, von denen ein oder mehrere Wasserstoffatome durch ein Halogenatom substituiert sein können, darstellen;
* mindestens ein Lithiumsalz.

2. Zelle nach Anspruch 1, wobei das Sulfonlösungsmittel Ethymethylsulfon ist.

3. Zelle nach Anspruch 1 oder 2, wobei das Carbonatlösungsmittel Dimethylcarbonat, Diethylcarbonat, Ethylmethylcarbonat oder die Mischungen davon ist.

4. Zelle nach einem der vorhergehenden Ansprüche, wobei der Elektrolyt als Lösungsmittel eine Mischung aus Ethylmethylsulfon und Dimethylcarbonat (beispielsweise in den jeweiligen Anteilen 1:1) umfasst.

5. Zelle nach einem der vorhergehenden Ansprüche, wobei für das Additiv R¹ bis R⁴ einem Wasserstoffatom entsprechen, wobei eine solche Verbindung dem Glycolid der folgenden Formel (X) entspricht:

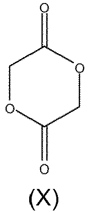

6. Zelle nach einem der Ansprüche 1 bis 4, wobei für das Additiv mindestens zwei der Gruppen R¹ bis R⁴ einer Alkylgruppe entsprechen.

7. Zelle nach einem der Ansprüche 1 bis 4 und 6, wobei das Additiv der folgende Formel (XI) entspricht:

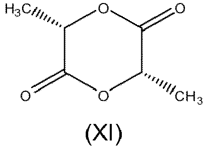

8. Zelle nach einem der vorhergehenden Ansprüche, wobei das Lithiumsalz Lithiumhexafluorphosphat (LiPF₆), Lithiumperchlorat (LiClO₄), Lithiumtetrafluorborat (LiBF₄), Lithiumhexafluorarsenat (LiAsF₆), Lithiumtrifluormethylsulfonat, Lithium-*bis*(oxalat)borat, Lithium-bis(trifluormethylsulfonyl)imid, Lithium-bis(fluorsulfonyl)imid, ein Lithiumperfluoralkylphosphat wie das der Formel LiP(CₙF₂ₙ₊₁)F₆₋ₓ mit 0 ≤ n ≤ 10 und 0 ≤ x ≤ 6, Lithium-*bis*(perfluorethylsulfonyl)imid, ein Lithiumperfluoralkylfluorborat wie das der Formel LiB(CₙF₂ₙ₊₁)F₄₋ₓ mit 0 ≤ n ≤ 10 und 0 ≤ x ≤ 4, das Lithium-*bis*(trifluormethansulfonyl)imid, das Lithium(difluoroxalat)borat (LiBF₂C₂O₄) oder das Lithium-bis(pentafluorethylsulfonyl)imid ist.

9. Zelle nach einem der vorhergehenden Ansprüche, wobei das Lithiumsalz LiPF₆ ist.

10. Zelle nach einem der vorhergehenden Ansprüche, wobei der Elektrolyt ein Elektrolyt ist, umfassend eine Mischung von EMS-DMC (zum Beispiel in einem Massenanteil von 1:1), Glycolid (1 Gew.-% bezogen auf die Gesamtmasse des Elektrolyts) und 1 M LiPF₆.

11. Zelle nach einem der vorhergehenden Ansprüche, wobei das aktive Material der positiven Elektrode das Oxid der Formel LiNi_{0,4}Mn_{1,6}O₄ ist.

12. Zelle nach einem der vorhergehenden Ansprüche, wobei das aktive Material der negativen Elektrode Graphit ist.

13. Lithiumbatterie, umfassend mindestens eine elektrochemische Zelle wie in einem der Ansprüche 1 bis 12 definiert.

## Claims

1. A lithium battery electrochemical cell comprising:
- a positive electrode comprising, as an active material, a lithium oxide of the following formula:
LiNi₁₋ₓMn₁₊ₓO₄
wherein 0 < x < 1;
- a negative electrode comprising, as an active material, a carbon material; and
- an electrolyte disposed between said positive electrode and said negative electrode comprising:
* as solvents, a mixture of a sulphone solvent of the following formula (II):
**R⁵-SO₂-R⁶** (II)
wherein R⁵ and R⁶ represent, independently of each other, a linear or branched alkyl group, comprising from 1 to 7 carbon atoms and optionally comprising one or more halogen atoms, an aryl group optionally comprising one or more halogen atoms;
and a carbonate solvent of the following formula (VII):
**R¹³-O-CO-O-R¹⁴** **(VII)**
wherein R¹³ and R¹⁴ represent, independently of each other, an alkyl group;
* at least one additive having the following formula (I): 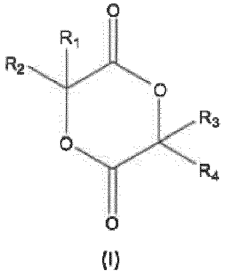 wherein R¹ to R⁴ represent, independently of each other, a hydrogen atom, an alkyl group comprising from 1 to 5 carbon atoms, one or more hydrogen atoms of which being possibly substituted with an halogen atom;
* at least one lithium salt.

2. The cell according to claim 1, wherein the sulphone solvent is ethylmethylsulphone.

3. The cell according to claim 1 or 2, wherein the carbonate solvent is dimethyl carbonate, diethyl carbonate, ethylmethylcarbonate or mixtures thereof.

4. The cell according to any of the preceding claims, wherein the electrolyte comprises, as solvents, a mixture of ethylmethylsulphone and dimethyl carbonate (for example, in respective proportions of 1:1).

5. The cell according to any of the preceding claims, wherein, for the additive, R¹ to R⁴ correspond to a hydrogen atom, such a compound corresponding to the glycolide of the following formula (X):

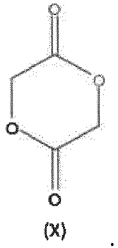

6. The cell according to any of claims 1 to 4, wherein, for the additive, at least two of the groups R¹ to R⁴ correspond to an alkyl group.

7. The cell according to any of claims 1 to 4 and 6, wherein the additive has the following formula (XI):

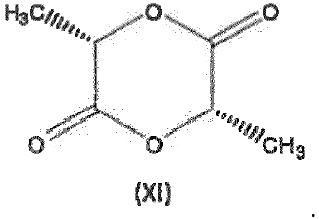

8. The cell according to any of the preceding claims, wherein the lithium salt is lithium hexafluorophosphate (LiPF₆), lithium perchlorate (LiClO₄), lithium tetrafluoroborate (LiBF₄), lithium hexafluoroarsenate (LiAsF₆), lithium trifluoromethylsulphonate, lithium *bis*(oxalato)borate, lithium *bis*(trifluoromethylsulphonyl)imidide, lithium *bis*(fluorosulphonyl)imide, lithium perfluoroalkylphosphate, such as that of the formula LiP(CₙF₂ₙ₊₁)F₆₋ₓ where 0 ≤ n ≤ 10 and 0 ≤ n≤ 6, lithium *bis*(perfluoroethylsulphonyl)imidide, a lithium perfluoroalkylfluoroborate, such as that of the formula LiB(CₙF₂ₙ₊₁)F₄₋ₓ where 0 ≤ n ≤ 10 and 0 ≤ n≤ 4, lithium *bis*(trifluoromethanesulphonyl)imidide, lithium (difluorooxalato)borate (LiBF₂C₂O₄) or lithium *bis*(pentafluoroethylsulphonyl)imidide.

9. The cell according to any of the preceding claims, wherein the lithium salt is LiPF₆.

10. The cell according to any of the preceding claims, wherein the electrolyte is an electrolyte comprising an EMS-DMC mixture (for example, in mass proportion 1:1), glycolide (1% mass with respect to the total mass of the electrolyte) and 1M LiPF₆.

11. The cell according to any of the preceding claims, wherein the active material of the positive electrode is the oxide of the formula LiNi_{0.4}Mn_{1.6}O₄.

12. The cell according to any of the preceding claims, wherein the active material of the negative electrode is graphite.

13. A lithium battery comprising at least one electrochemical cell as defined in any of claims 1 to 12.
